# EUROPEAN PATENT APPLICATION

(11) **EP 3 270 299 A1**
(43) Date of publication of application: **17.01.2018**
(21) Application number: 16761042.7
(22) Date of filing: 01.03.2016
(51) Int. Cl.: G06F 17/30, G06F 17/27, G06F 3/023, G06F 3/0488

(54) **FORWARD INPUT ERROR CORRECTION METHOD AND APPARATUS BASED ON CONTEXT**

(30) Priority: 10.03.2015 CN 201510106752
(71) Applicant: Shanghai Chule (CooTek) Information Technology Co., Ltd, Shanghai 200233 (CN)
(72) Inventor: SONG, Linjie, Shanghai 200233 (CN); WU, Kun, Shanghai 200233 (CN); DAI, Yun, Shanghai 200233 (CN)
(74) Representative: Kolster Oy Ab
(86) International application number: PCT/CN2016/075183
(87) International publication number: WO 2016/141815

(57) **Abstract**

A method for context-based forward input error correction is provided, including: obtaining text that has been confirmed before the current entry is started; searching a corpus based on a corrected form of the confirmed text to obtain a result containing the corrected form of the confirmed text; and correcting the confirmed text based on the result. A device hereof is also provided. The embodiments significantly simplify user operations, improve input efficiency and accuracy and enhance the user experience.

## Description

### TECHNICAL FIELD

The present invention relates to the field of applications for electronic products and, in particular, to a method and device for context-based forward input error correction during text entry into an electronic product.

### BACKGROUND

Nowadays, portable electronic devices such as smart phones and tablet PCs have been increasingly popular. As basic tools for human-computer interaction, text entry methods have a direct impact on users' experience on the use of such electronic devices. Speed and accuracy serve as primary metrics for the performance of an entry method. Acquisition of more accurate candidate words with fewer operations has been pursued by entry methods, and correction is just one of several ways for achieving this goal.

Entry errors may arise from a variety of objective causes such as pressing of wrong keys due to a limited keyboard size or subjective causes such as the user's own typographical errors. At present, for such an entry error, no matter due to a subjective or objective cause, most entry methods can only provide backward correction, i.e., correcting a string to be subsequently entered based on a string that is being or has been entered by the user.

However, such an artificial error correction method will not only impede increases in the user's entry speed but also hinder further enhancements in the method itself.

### SUMMARY

It is an object of the present invention is to provide a method and device for intelligent context-based forward input error correction.

According to an aspect of the present invention, a method for context-based forward input error correction is provided, includes: obtaining text confirmed before the current entry is started, which is, in particular, one or more words located upstream of the current location of a cursor; searching a corpus based on a corrected form of the confirmed text to obtain predicted or automated words corresponding to the corrected form of the confirmed text; and forming candidates based on the corrected form of the confirmed text and the corresponding predicted or automated words and, upon detecting that one of the candidates containing the corrected form of the confirmed text is selected, correcting the confirmed text based on the selected candidate.

According to a particular aspect of the present invention, searching the corpus based on the corrected form of the confirmed text to obtain the search result containing the corrected form of the confirmed text further comprises selecting a portion of one of the candidates by a user through making a gesture at a location so that the candidate can be divided into the selection portion and the remaining potion. Specifically, it may comprise: determining whether there is a string being currently entered, when there is a string being currently entered, obtaining the corresponding predicted words by searching the corpus based on the corrected form of the confirmed text and filtering a search result based on the string being currently entered or by triggering use of the corrected form of the confirmed text based on the string being currently entered; and when there is no string being currently entered, obtaining the corresponding automated words based on the corrected form of the confirmed text.

According to a particular aspect of the present invention, the method further includes: searching the corpus based respectively on the corrected form of the confirmed text and an original form thereof to obtain the predicted or automated words corresponding to the corrected form of the confirmed text and predicted or automated words corresponding to the original form of the confirmed text.

According to another aspect of the present invention, a device for context-based forward input error correction is provided, comprising: an obtaining unit, adapted to obtain confirmed text; a search unit, adapted to search a corpus based on a corrected form of the confirmed text to obtain predicted or automated words corresponding to the corrected form of the confirmed text; a candidate obtaining unit, adapted to form candidates based on the corrected form of the confirmed text and the corresponding predicted or automated words, display the candidate and obtain a selected candidate based on an input; and a correction unit, adapted to correct the confirmed text based on the candidate obtained by the candidate obtaining unit.

According to a particular aspect of the present invention, the search unit is further adapted to, when there is no string being currently entered, obtain the corresponding automated words based on the corrected form of the confirmed text and, when there is a string being currently entered, obtain the corresponding predicted words by searching the corpus based on the corrected form of the confirmed text and filtering a search result based on the string being currently entered or by triggering use of the corrected form of the confirmed text based on the string being currently entered.

According to a particular aspect of the present invention, the search unit is further adapted to search the corpus based respectively on the corrected form and an original form of the confirmed text to obtain the predicted or automated words corresponding to the corrected form of the confirmed text and predicted or automated words corresponding to the original form of the confirmed text.

Compared with the prior art, in the present invention, a corrected form of text that has been confirmed for display by the user serves as a basis for a search in the corpus for corresponding associated or predicted words as well as for formation of candidates. A prompt is provided to the user for selecting one of the candidates based on which the confirmed text is corrected. This allows direct correction of the confirmed text without interrupting the ongoing text entry and without additional processing of the text, entailing a significant breakthrough in the word selection methodology of the existing entry methods and a fundamental change from the backward correction mechanism used in the existing entry methods as a default. Further, this also significantly simplifies user operations, improves entry efficiency and accuracy and enhances user experience.

### BRIEF DESCRIPTION OF THE DRAWINGS

Figs. 1 and 2 schematically show an interface for interaction between a user and a portable electronic device during text entry.
Fig. 3 is a schematic flowchart of one embodiment of a method for context-based forward input error correction according to the present invention.
Fig. 4 is a diagram schematically illustrating operations in a specific embodiment of the method for context-based forward input error correction according to the present invention.
Fig. 5 is a diagram schematically illustrating operations in another specific embodiment of the method for context-based forward input error correction according to the present invention.
Fig. 6 is a diagram schematically illustrating operations a further specific embodiment of the method for context-based forward input error correction according to the present invention.
Fig. 7 is a diagram schematically illustrating operations in a further specific embodiment of the method for context-based forward input error correction according to the present invention.
Fig. 8 is a diagram schematically illustrating operations in a further specific embodiment of the method for context-based forward input error correction according to the present invention.
Fig. 9 is a schematic flowchart of a specific embodiment of step S5 of Fig. 3.
Fig. 10 is a schematic showing a display layout of candidates in a specific embodiment of step S510 of Fig. 9.
Fig. 11 is a schematic flowchart of another specific embodiment of step S5 of Fig. 3.
Fig. 12 is a diagram schematically illustrating operations in a specific embodiment of step S520 of Fig. 1.
Fig. 13 is a structural schematic of one embodiment of a device for context-based forward input error correction according to the present invention.
Fig. 14 is a structural schematic of one embodiment of a candidate obtaining unit of Fig. 13.
Fig. 15 is a structural schematic of another embodiment of the candidate obtaining unit of Fig. 13.

### DETAILED DESCRIPTION

Most conventional input methods adopt backward error correction. As used herein, the term "forward correction" or "backward correction" refers to correction of text that is located downstream or upstream with respect to the current position of a cursor in a text input field during normal text input, respectively. During normal text input, the "current cursor position" refers to a start point of the user's current input. Text located upstream, i.e., backward, with respect to the current cursor position is usually text that has been confirmed by the user, while text located downstream, i.e., forward, relative to the current cursor position usually refers to text that is being currently entered but has not been confirmed by the user. Depending on input methods, the current text is sometimes entered in a separate text input field displayed in a specific area, for example, above a keyboard, or directly in a main text input field. In the latter case, the text is additionally underlined or blinks with the cursor, indicating that this text is being currently entered and has not been confirmed.

Conventionally, correction of an input error is usually conducted in a backward manner. Examples of such input errors include mistaken pressing of the adjacent key "b" for the intended key "a" and misspelling of the word "can" as the string "csn". Instead of being confirmed for display, the string "csn" may be first corrected to the word "can" and then displayed as a candidate in a candidate field for selection by the user. However, in this case, when the user has mistakenly confirmed the text "csn" or even has started to enter subsequent text before being aware of the mistake, the conventional method could not correct it any more without interrupting the ongoing text input.

The inventors have recognized such limitations of the conventional techniques and creatively propose a method and device allowing intelligent "forward correction" of text that has been confirmed before the cursor reaches the current position and hence providing the user with higher correction flexibility, efficiency, speed and accuracy in term of text input.

As used herein, the term "confirmation for display" denotes an action of the user for selecting and confirming a candidate word in a predefined manner so as to allow the candidate word to be displayed at the current cursor position in the text input field.

A more complete description of exemplary embodiments will be set forth below with reference to the accompanying drawings throughout which like reference numerals indicate similar or identical elements. While several exemplary embodiments have been described below, they are not intended to limit the present invention in any sense, and modifications, adaptations, and other alternative implementations of the invention, such as equivalent substitutions, additions or modifications to the elements shown in the drawings or substitutions, reordering or additions of process steps, are possible without departing from the concept thereof. The scope of the invention should be defined as by the appended claims.

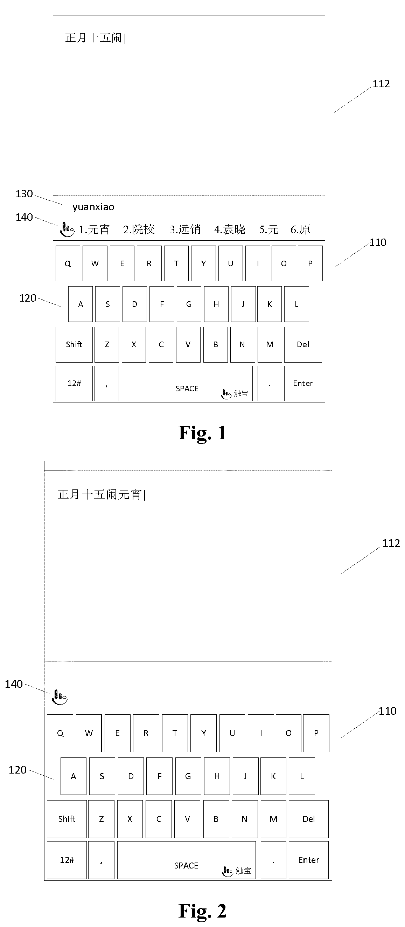

Fig. 1 shows an exemplary interface for interactions between a user and a portable electronic device during a normal input of text. The interface is displayed on a touch screen of the portable electronic device and contains at least a keyboard area 110 and a text input field 112. The text input field 112 is generally configured to display text that has been confirmed by the user for display. The text input field 112 contains a cursor for indicating a start point of ongoing text input. A string that is being currently entered and has not been confirmed is displayed in another input field 130. In the keyboard area 110, a virtual keyboard 120 containing keys is displayed. After the user taps, or makes a swipe motion across, corresponding keys in the virtual keyboard 120, the string is displayed in the input field 130. Candidate words corresponding to the entered string or words predicted or associated based on the string are displayed in a candidate field 140. With reference to Fig. 2, when the user taps one of the candidate words in the candidate field 140 or a numeral representation thereof, the candidate word will be confirmed by the user and then displayed at the position of the cursor in the text input field 112, followed by clearance of all candidate words in the candidate field 140.

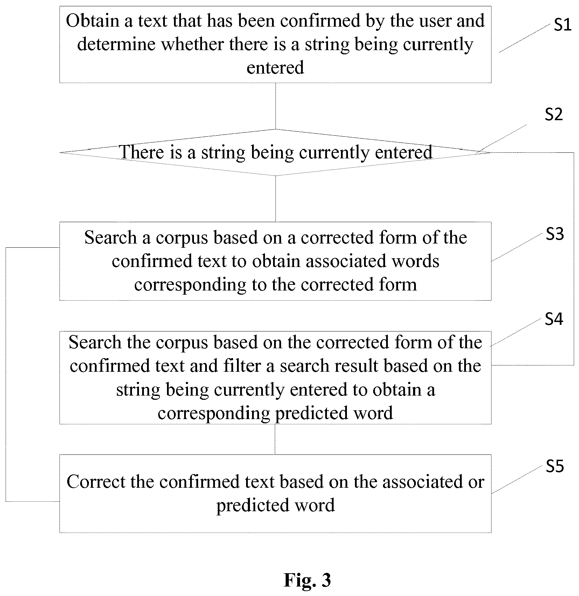

Fig. 3 shows a specific embodiment of a method for context-based forward input error correction according to the present invention. The method includes:
obtaining a text, by step S1, that has been confirmed by the user;
Determining, by step S2, whether there is a string being currently entered by the user, and when there is , turn to step S4 to obtain a predicted word based both on the string being currently entered and the confirmed text; otherwise, continue to step S3, so as to obtain an automated word based on the confirmed text;
searching, by step S3, a corpus based on a corrected form of the confirmed text to obtain an automated word corresponding to the corrected form and proceeding to step S5;
obtaining, by step S4, a predicted word, by searching the corpus based on the corrected form of the confirmed text and filtering a search result based on the string being currently entered by the user, or by triggering use of the corrected form of the confirmed text based on the string being currently entered by the user; and
correcting, by step S5, the confirmed text based on a candidate comprising an original form or the corrected form of the confirmed text and the subsequent automated words or predicted words.

The confirmed text is a text that has been confirmed by the user before the ongoing input is initialized and may include one or more words prior to the current cursor position.

In a particular embodiment, the corrected form of the confirmed text may include its initially capitalized form.

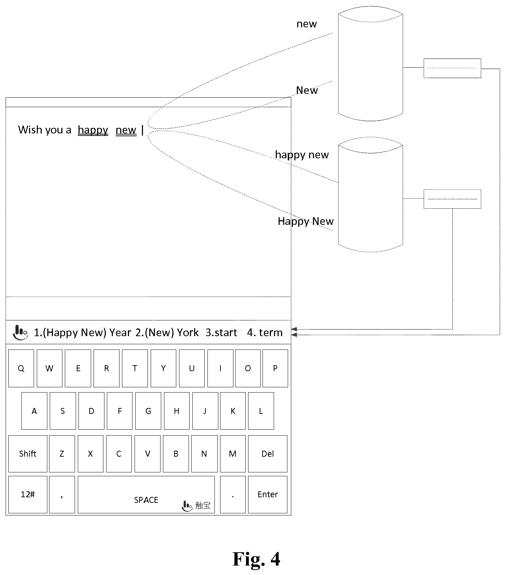

With reference to Fig. 4, for instance, the text "Wish you a happy new" has been confirmed for display by the user. According to embodiments of the present invention, firstly, in step S 1, the confirmed text, for example, the string "new", is obtained. Next, before the user continues to input, i.e., absence of a string being currently entered, step S3 is performed. In step S3, it may include: searching a corpus based respectively on an original form of the confirmed text and a corrected form thereof to obtain an automated word corresponding to the original form and an automated word corresponding to the corrected form. Specifically, a search may be performed in the corpus based on the original form of the confirmed text "new", i.e., the confirmed text itself, to obtain an automated word corresponding to the original form, for example, "start", "term", "page", etc. Additionally, another search may be performed based on the corrected form of the confirmed text "new", for example, its initially capitalized form "New", to obtain automated words corresponding to the corrected form, for example, "Year", "York", etc. Similarly, when the string "happy new" is obtained as the confirmed text, then in step S3, the corpus may be searched based respectively on its original form, i.e., "happy new", and its corrected form, i.e., its initially capitalized "Happy New", to obtain automated words corresponding to the original form, such as (happy new) "year", and automated words corresponding to the corrected form, such as (Happy New) "Year".

In one embodiment, phrases each comprising the corrected form of the confirmed text and at least one word are stored in the corpus incompatibly with phrases comprising the original form of the confirmed text and the same at least one word so that there are no any two phrases in the corpus which differ from each other only in that one of them is the corrected form of the other. In other words, for example, when "New York" is stored in the corpus, then "new York" or "new york" will not. As another example, when "Mountain View" is stored in the corpus, then "mountain view" or "mountain View" will not. In one specific implementation, in each phrase containing the corrected form of the confirmed text, all the subsequent word(s) is/are also in the corrected form. For example, each word in the phrase is initially capitalized. In one specific implementation, the corpus is constructed from statistics and analysis of mass data, in which there is at least one phrase in the corrected form which is a fixed collection. For example, in case of the corrected form being an initially capitalized form, the corpus may contain phrases in the corrected form which are fixed collections, for example, personal names such as "George Washington", geographical names such as "Cascade Range", "Great Wall", "Dead Sea", "Downing Street" and "South America", specific dates such as "Labor day" and "Valentine's Day", landmarks such as "White House" and "Golden Gate Bridge", titles of books, novels and film and television works such as "Catching Fire", "Sycamore Row" and "Big Bang Theory", etc.

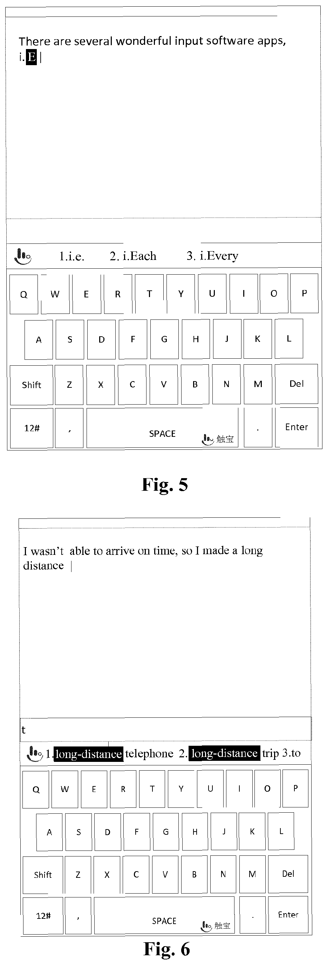

Similarly, the corrected form of the confirmed text may also be a form in which all letters are is lowercased. In a specific embodiment, with reference to Fig. 5, a letter entered by the user may be inappropriately capitalized, for example, due to a punctuation mark indicating the end of the sentence. Specifically, for example, during the input of "i.e.", when user enters "e" following "i.", "e" will be considered as the first letter of a new sentence and hence be capitalized due to the preceding period ".". As a result, the original form of the confirmed texted will appear as "i.E". In this case, before the user enters the second ".", a forward input error correction process may be performed in step S3, including searching the corpus based on the original form of the confirmed text, i.e., "i.E", to obtain automated words corresponding to the original form, such as, for example, "i.Each", "i.Every" and the like; and further searching the corpus based on the corrected form of the confirmed text, for example, its all-lowercase form "i.e", to obtain automated words corresponding to the corrected form, such as, for example, "i.e.", etc.

In a further specific embodiment, the corrected form of the confirmed text may include its other written forms such as a spaced form and a hyphenated form. For example, with reference to Fig. 6, for the text "long distance" that has been confirmed for display by the user, according to this embodiment, the confirmed text, i.e., the string "long distance", is first obtained in step S1. Afterward, before the user continues input, step S3 is carried out, including: searching the corpus based on the original form of the confirmed text "long distance" to obtain automated words corresponding thereto, such as, for example, "to"; and further searching the corpus based on the corrected form of the confirmed text "long distance", for example, its hyphenated form "long-distance", to obtain automated words corresponding thereto this original form "long-distance", such as, for example, "telephone" and "trip".

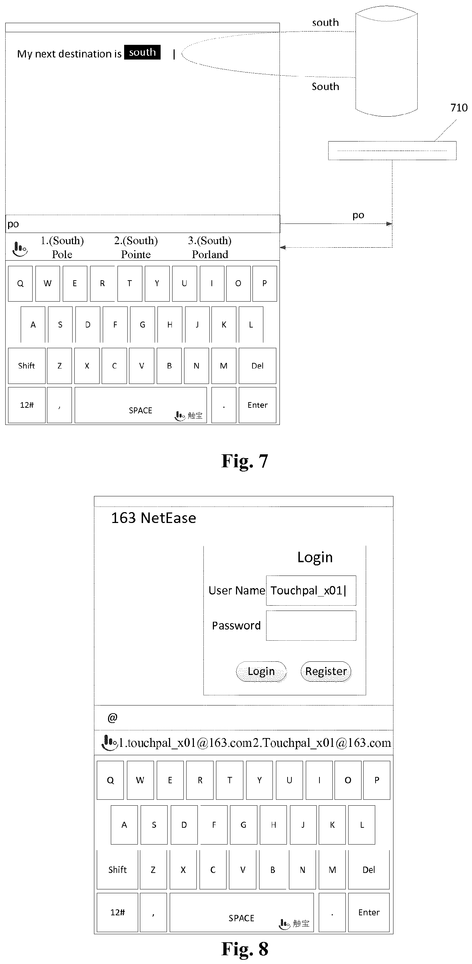

When the user continues input following the confirmation of the text, step S4 may be carried out. In one embodiment, step S4 may include: based on a string being currently entered by the user, filtering the search result based on the corrected form of the confirmed text to obtain corresponding predicted words. In a specific embodiment, with reference to Fig. 7, upon detecting the confirmation by the user for display of an entered string (e.g., "south"), the confirmed string, i.e., "south", is obtained. Subsequently, the corpus is searched based respectively on the original and corrected forms of the string, for example, the all-lowercase form "south" and the initially capitalized form "South", and automated words are obtained and displayed to the user as the result 710 of the search. Afterward, when detecting that the user is entering "po", a filtering process is performed on the results 710 based on the string "po" to obtain words beginning with "po" such as "(South) Pole", "(South) Pointe", "(South) Porland", etc.

As the search result may include phrases containing the corrected form of the confirmed text, or phrases containing the original form of the confirmed text, or both of them, and since phrases containing the corrected form of the confirmed text are stored in the corpus incompatibly with phrases containing the original form of the confirmed text, step S4 may further include: filtering the search result based respectively on the original form of the string being currently entered by the user (e.g., "po") and the corrected form thereof (e.g., "Po"), so that a result of the filtering contains the original form or corrected form of the entered string.

In another one embodiment, step S4 may include: obtaining the corresponding predicted words by triggering use of the corrected form of the confirmed text based on the string being currently entered by the user. In a specific embodiment, with reference to Fig. 8, when the user is entering an email address with the first letter being unnecessarily capitalized, upon detecting that the symbol "@" in the email address has been just entered, the confirmed text with all the letters between the symbol and the closest space being lowercased may be provided to the user for selection.

Step S5 is then performed. With the search result possibly containing both the associated and predicted words obtained based on the corrected form of the confirmed text and the associated and predicted words obtained based on the original form of the confirmed text, on the one hand, in order to achieve better user experience, it is sensible to provide all of the words obtained based on both the two forms as candidates, and on the other hand, when all of them are confirmed for display, there may be duplicate candidates displayed. Therefore, a preliminary process is necessary to address this issue.

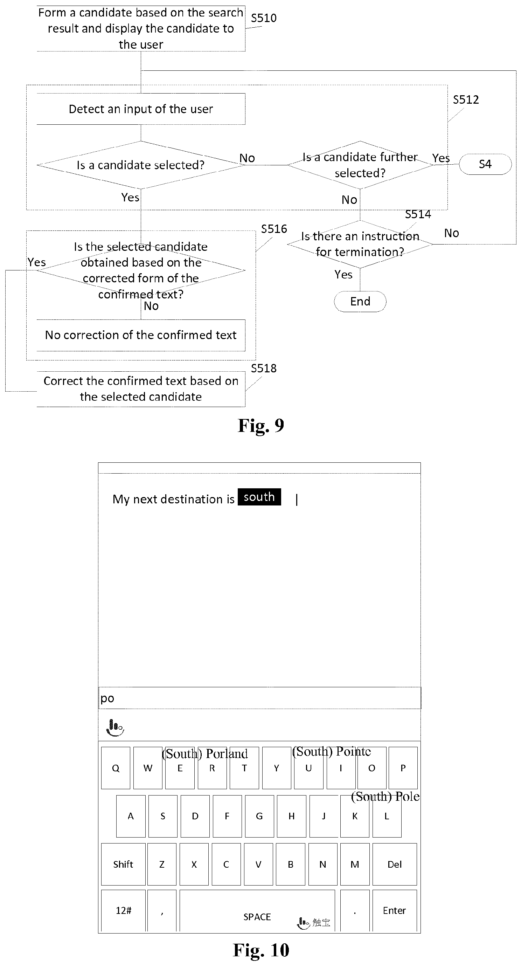

In one embodiment, with reference to Fig. 9, step S5 may further comprise:
in step S510, forming the candidates from the search result of step S3 or S4 as and displaying the candidates to the user;
in step S512, detecting an input of the user and proceeding to step S516 when the input is to select one of the candidates, or returning to step S4 when the input is to continue input, or proceeding to step S514 when the input is nothing;
in step S514, detecting whether there is an instruction for termination, and when so, ending the process; otherwise, returning to step S512;
in step S516, obtaining the candidate selected by the user and determining whether it is obtained based on the original form or corrected form, wherein when the candidate is obtained based on the corrected form, step S518 is carried out, and when the candidate is obtained based on the original form, the confirmed text is not corrected; and
in step S518, correcting the confirmed text based on the candidate selected by the user.

Specifically, in one embodiment of step S510, forming the candidates from the search result of step S3 or S4 may include: forming the candidates by combining the respective automated words resulting from step S3 or the respective predicted words from step S4 with the original form or corrected form of the confirmed text. In another embodiment, the search result performed in the corpus in step S3 or S4 contains the original or corrected form of the confirmed text, and in step S510, the result of step S3 or S4 is directly displayed as the candidates. These candidates can be displayed in the candidate field 501 as shown in Fig. 7, or around respective associated letters in the keyboard as shown in Fig. 10. The associated letters may be the first letters of the automated words or the first letters of strings remaining from deleting the string being currently entered by the user from each of the predicted words.

In step S514, the instruction for termination may include a predefined motion, or the manipulation of a predetermined key. For example, the process is ended when a press on an "exit" key by the user is detected.

Step S516 is performed when one of the candidates is selected by the user. In one embodiment, step S516 may include: determining whether the candidate has a correction marker or whether its correction marker has been changed. When so, it is determined that the candidate is obtained based on the corrected form. In specific implementations, step S516 may further include obtaining the correction marker of the selected candidate. For example, during storage of phrases in the corpus, each comprising the corrected or original form of the confirmed text and at least one subsequent word, a correction marker may be allocated to each of the phrases to indicate its correction form. In some embodiments, a first bit of the correction marker may indicate how the phrase is capitalized. For example, when the first bit assumes the value of 1, it may be indicated that the phrase is initially capitalized, while 0 may indicate that each letter in the phrase is lowercased. A second bit of the correction marker may be used to indicate whether the phrase is hyphenated. For example, the value of the second bit of 1 may indicate that the phrase is hyphenated, with 0 indicating that it is not hyphenated. The correction marker of the selected candidate may be compared with that of the confirmed text to find whether there is a difference between them. When there is a difference between the two correction markers, it is determined that the selected candidate contains the corrected form of the confirmed text. As another example, only phrases containing the corrected form of the confirmed text are each provided with a correction marker. In this case, when such a phrase having a correction marker is detected, the confirmed text is corrected.

In another embodiment, step S516 may include: textually comparing the selected candidate with the confirmed text to find whether the selected candidate contains the corrected form of the confirmed text. In a specific embodiment, the engine layer may return the selection to the interface layer which, in turn, masks the associated or predicted word, i.e., the text "View" and textually comparing the remainder, i.e., the text "Mountain" with the string immediately preceding the current cursor position. When the two are identical in terms of all aspects including letter case, spelling, written form, etc., there is no need to correct the confirmed text, and the interface layer displays only the associated or predicted words. When the compared two are different, e.g., in terms of any aspect such as letter case, spelling or written form, the interface layer displays the entire candidate, i.e., "Mountain View".

After that, step S518 is performed in which the confirmed text is corrected based on the selected candidate. Specifically, the confirmed text may be replaced with the selected candidate. For example, the text "united" that has been confirmed by the user for display can be deleted and replaced with the selected candidate "United States".

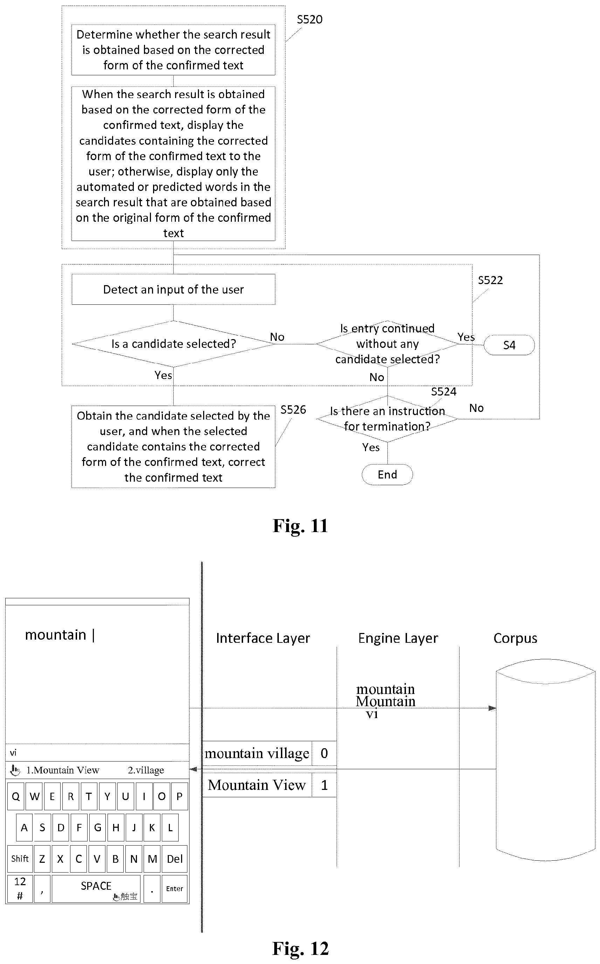

In another embodiment, with reference to Fig. 11, step S5 may further comprise:
in step S520, determining whether the search result of step S3 or S4 is obtained based on the original or corrected form of the confirmed text, and when the search result is obtained based on the corrected form of the confirmed text, displaying candidates containing the corrected form of the confirmed text to the user; otherwise, displaying only the associated or predicted words in the search result that are obtained based on the original form of the confirmed text;
in step S522, detecting an input of the user and proceeding to step S526 when the input is to select one of the candidates displayed in step S520, or returning to step S4 when the input is to continue input, or proceeding to step S524 when the input is nothing;
in step S524, detecting whether there is an instruction for termination, and when so, ending the process; otherwise, returning to step S522; and
in step S526, obtaining the candidate selected by the user and correcting the confirmed text when the selected candidate contains the corrected form of the confirmed text.

Step S520 may further comprises determining whether the search result has correction markers or whether its correction markers have been changed. When it has correction markers or its correction markers have been changed, it is determined that the search result is obtained based on the corrected form. In specific implementations, the step may include obtaining correction markers of the search result. For example, each phrase stored in the corpus may have a correction marker indicating its correction form. In some embodiments, a first bit of the correction marker may indicate how the phrase is capitalized. For example, when the first bit assumes the value of 1, it may be indicated that the phrase is initially capitalized, while 0 may indicate that each letter in the phrase is lowercased. A second bit of the correction marker may be used to indicate whether the phrase is hyphenated. For example, the value of the second bit of 1 may indicate that the phrase is hyphenated, with 0 indicating that it is not hyphenated. The correction markers of the search result may be compared with that of the confirmed text to find whether there is a difference. When there is a difference, it is determined that the result contains the corrected form of the confirmed text. As another example, only phrases containing the corrected form of the confirmed text are each provided with a correction marker. In this case, when such a phrase is detected, it is determined that it is obtained based on the corrected form of the confirmed text.

In one embodiment, the search result contains the original or corrected form of the confirmed text. In this case, when the search result is obtained based on the original form of the confirmed text, the original form of the confirmed text is deleted from phrases in the search result and the remainders of the phrases is displayed to the user as the candidates. In another embodiment, the search result contains only the associated or predicted words obtained based on the original or corrected form of the confirmed text. In this case, when the search result is obtained based on the corrected form of the confirmed text, the search result is combined with the corrected form of the confirmed text to form the candidates which are then displayed to the user. According to some embodiments, with reference to Fig. 12, the engine layer may pass the search result on to the interface (UI) layer. For example, after the user has entered and confirmed the word "mountain", when he/she continues entering the string "vi", the engine layer may obtain a search result based both on the confirmed text "mountain" and on the string "vi" being currently entered. After that, the engine layer may return the search result "Mountain View" to the interface layer. During the transmission of "Mountain View", a correction marker may be additionally provided to the interface layer, in order to instruct the interface layer that correction of the confirmed text is required for the transmitted phrase. Upon receiving "Mountain View", the interface layer may first check whether the correction marker exists or whether the correction marker differs from a preset marker so as to know whether correction of the confirmed text is required. When the correction is required, the interface layer may directly display the transmitted phrase, i.e., "Mountain View". When the correction is not necessary, the interface layer may remove the confirmed text from the transmitted phrase, and display the remainder to the user as a candidate.

In another embodiment, step S520 may comprise: textually comparing the search result with the confirmed text so as to determine whether the search result is obtained based on the corrected form. For example, the engine layer may return the search result to the interface layer which may then mask the associated or predicted word, i.e., "View" and textually compare the remainder, i.e., "Mountain", with the string immediately preceding the current cursor position, i.e., the confirmed text. When they are identical in terms of all aspects including letter case, spelling, written form, etc., it is known that correction of the confirmed text is not needed, and the interface layer may remove the confirmed text from the search result and display the remainder as a candidate. When the compared two are different, e.g., in terms of any aspect such as letter case, spelling or written form, the interface layer may display the entire search result, i.e., the combination of the corrected form of the confirmed text with the predicted or automated word, i.e., "Mountain View".

Step S520 may further comprise prompting the user by displaying the corrected form of the confirmed text in a particular manner. For example, the corrected form of the confirmed text may be highlighted, underlined or otherwise displayed.

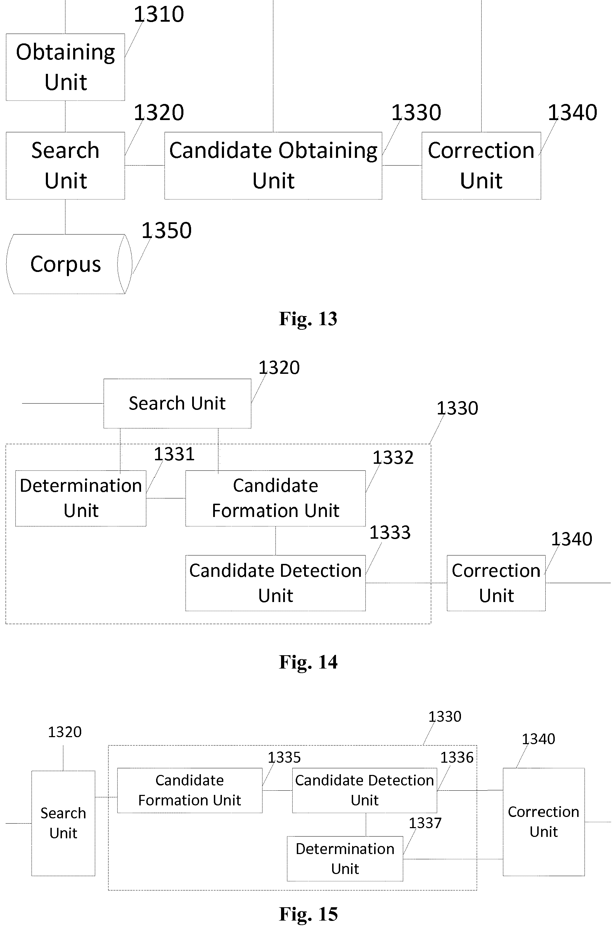

With reference to Fig. 13, the present invention also provides a device for context-based input forward input error correction. In a specific embodiment, the device includes: an obtaining unit 1310, adapted to obtain confirmed text; a search unit 1320, adapted to search a corpus 1350 based on a corrected form of the confirmed text to obtain predicted or automated words corresponding to the corrected form of the confirmed text; a candidate obtaining unit 1330, adapted to form candidates based on the corrected form of the confirmed text and the corresponding predicted or automated words and display the candidates to a user; a correction unit 1340, adapted to correct the confirmed text based on the candidates formed by the candidate obtaining unit 1330; and the corpus 1350, adapted to store text.

Specifically, the confirmed text may be text that has been confirmed for display by the user before the ongoing input is started, The confirmed text may be one or more words located upstream of the current location of a cursor. The obtaining unit 1310 may be further adapted to, when there is a string being currently entered, obtain the string being currently entered.

In some embodiments, the search unit 1320 is further adapted to, when there is no string being currently entered, obtain the corresponding automated words based on the corrected form of the confirmed text and, when there is a string being currently entered, obtain the corresponding predicted words by searching the corpus based on the corrected form of the confirmed text and filtering a search result based on the string being currently entered or by triggering use of the corrected form of the confirmed text based on the string being currently entered. The search unit 1320 may be further adapted to filter the search result based respective on an original form of the string being currently entered by the user and on a corrected form thereof.

In some embodiments, the search unit 1320 may be further adapted to search the corpus based respectively on the corrected form and an original form of the confirmed text to obtain the predicted or automated words corresponding to the corrected form of the confirmed text and predicted or automated words corresponding to the original form of the confirmed text. In one embodiment, phrases each comprising the corrected form of the confirmed text and at least one subsequent word may be stored in the corpus incompatibly with phrases each comprising the original form of the confirmed text and at least one subsequent word.

In some embodiments, with reference to Fig. 14, the candidate obtaining unit 1330 may further comprise: a determination unit 1331, adapted to determining whether the search result performed by the search unit 1320 is obtained based on the original form or corrected form of the confirmed text; a candidate formation unit 1332, adapted to form candidates based on a result of the determination made by the determination unit 1331, wherein, in particular, when the search result is obtained based on the corrected form of the confirmed text, combinations each comprising the corrected form of the confirmed text and one of the associated or predicted words in the search search result unit 1320 are taken as the candidates, and otherwise, the associated or predicted words in the result are taken as the candidates; and a candidate detection unit 1333, adapted to display the candidates from the candidate formation unit 1332 and obtain one of the candidates that is selected by the user based on an input of the user. After that, the correction unit 1340 retrieves the selected candidate from the candidate obtaining unit 1330 and corrects the confirmed text based on the selected candidate.

In some embodiments, with reference to Fig. 15, the candidate obtaining unit 1330 may further comprise: a candidate formation unit 1335, adapted to form the candidates based on the result of search from the search unit 1320; a candidate detection unit 1336, adapted to display the candidates to the user and obtain one of the candidates that is selected by the user by detecting an input of the user; and a determination unit 1337, adapted to determine whether the selected candidate is based on the original form of the confirmed text or on the corrected form thereof. When the determination unit 1337 determines that the selected candidate is based on the corrected form of the confirmed text, the correction unit 1340 corrects the confirmed text based on the candidate from the candidate obtaining unit 1330.

In some embodiments, the determination unit 1331 or 1337 may be adapted to determine whether the candidate is obtained based on the original form of the confirmed text or corrected form thereof through determining whether it has a correction marker or whether its correction marker has been changed, and when it has a correction marker or its correction marker has been changed, determining that it is obtained based on the corrected form of the confirmed text, or textually comparing a portion of the candidate remaining from deleting the associated or predicted word with the confirmed text, and when they are identical, determining that the candidate is obtained based on the original form of the confirmed text.

In some embodiments, the candidate detection unit 1333 or 1336 may be further adapted to prompt the user by displaying the corrected form of the confirmed text in the candidates in a particular manner.

In some embodiments, phrases each comprising the corrected form of the confirmed text and at least one subsequent word may be stored in the corpus 1350 incompatibly with phrases each comprising the original form of the confirmed text and at least one subsequent word.

Compared with the prior art, the present invention entails an alternative to the backward correction mechanism used in the existing input methods as a default. In the present invention, a corrected form of text that has been confirmed for display by the user serves as a basis for a search in the corpus for corresponding associated or predicted words as well as for formation of candidates. A prompt is additionally provided to the user for selecting one of the candidates based on which the confirmed text is corrected. This allows direct correction of the confirmed text without interrupting the ongoing text input and without additional processing of the text. Such a significant breakthrough in the word selection methodology significantly simplifies user operations, improves input efficiency and accuracy and enhances user experience.

The present invention may be applicable to various languages, and the inventive concept is not intended to be limited to the languages involved in the embodiments disclosed herein. It will be understood by those skilled in the art that the present invention is applicable to Indo-European languages such as English, French, Italian, German, Dutch, Persian, Afghan and Finnish, or Sino-Tibetan languages such as Simplified Chinese, Traditional Chinese and Tibetan, or Caucasian languages such as Chechen and Georgian, Uralic languages such as Finnish and Hungarian, or North American Indian languages such as Eskimo, Cherokee, Sioux and Creek, or Austroasiatic languages such as Cambodian, Mon and Brownian, or Dravidian languages such as Tamil, Altaic languages such as East and West Altaic languages, or Nilo-Saharan languages used for example, in the countries in the northern and western parts of Africa, or Niger-Congolese languages such as Niger, Congo and Swahili, or Khoisan languages such as Hottentot, Bushman and Sandawe, or Semitic-Hamitic languages such as Hebrew, Arabic, ancient Egyptian and Hausa, or Austronesian languages such as Indonesian, Malay, Javanese, Fijian and Maori.

Merely for the purpose of illustration, some aspects and embodiments have been described herein with reference to the components shown in the drawings. Functions of these illustrated components may overlap and be provided with fewer or more elements and components. In addition, all or part of the functions of the illustrated elements may coexist or may be distributed among several geographically dispersed locations. Moreover, the embodiments, features, aspects, and principles of the present invention may be implemented in various embodiments and are not limited to the shown environments. Further, the sequence of the above-described events is exemplary and is not intended to be limiting. Accordingly, other method steps may be used, and even with the above-described method, the particular order of events may vary without departing from the scope of the invention. Additionally, certain steps may not be included, and other steps may be added.

The embodiments of the invention presented above may generally be implemented in or on a computer system architecture well known in the art, and their functions may be implemented by hardware or software. In the case of software, a component can be a step, a program or part thereof that performs a specific or relevant function. In the case of hardware, a unit is a functional hardware unit designed to be used with other components. For example, a unit may be implemented by discrete electronic components, or as part of a complete application specific integrated circuit (ASIC) or in many other possible manners. It will be appreciated by those skilled in the art that the present invention may also be implemented by a combination of hardware and software components.

A few specific embodiments of the present invention have been described above. It is to be understood that the invention is not limited to these specific embodiments and various changes and modifications may be made by those skilled in the art within the scope of the appended claims while not affecting the essence of the invention.

## Claims

1. A method for context-based forward input error correction, comprising:
obtaining a confirmed text;
searching a corpus based on a corrected form of the confirmed text to obtain a predicted or automated word corresponding to the corrected form of the confirmed text; and
forming a candidate based on the corrected form of the confirmed text and the corresponding predicted or automated word and, upon detecting that the candidate containing the corrected form of the confirmed text is selected, correcting the confirmed text based on the selected candidate.

2. The method according to claim 1, wherein searching the corpus based on the corrected form of the confirmed text to obtain the predicted or automated word corresponding to the corrected form of the confirmed text further comprises:
determining whether there is a string being currently entered by a user, when there is a string being currently entered;
obtaining a corresponding predicted word, by searching the corpus based on the corrected form of the confirmed text and filtering the search result based on the string being currently entered, or by triggering use of the corrected form of the confirmed text based on the string being currently entered; and
when there is no string being currently entered, obtaining the corresponding automated words based on the corrected form of the confirmed text.

3. The method according to claim 1 or 2, further comprising: searching the corpus based respectively on the corrected form of the confirmed text and an original form thereof to obtain a predicted or automated word corresponding to either form of the confirmed text.

4. The method according to claim 3, wherein forming the candidates based on the corrected form of the confirmed text and the corresponding predicted or automated word and, upon detecting that the candidate containing the corrected form of the confirmed text is selected, correcting the confirmed text based on the selected candidate comprises:
displaying the candidate to the user and detecting a selection by the user;
obtaining the candidate selected by the user and determining whether it is obtained based on the original form of the confirmed text or corrected form thereof; and
when the selected candidate is obtained based on the corrected form of the confirmed text, correcting the confirmed text based on the selected candidate.

5. The method according to claim 4, wherein determining whether the candidate is obtained based on the original form of the confirmed text or corrected form thereof comprises:
determining whether the candidate has a correction marker or whether its correction marker has been changed; when it has a correction marker or its correction marker has been changed, said candidate is determined to be obtained based on the corrected form of the confirmed text; or
textually comparing a remaining portion of the candidate besides the automate or predicted word with the confirmed text, and whenthey are identical, the candidate is determined to be obtained based on the original form of the confirmed text.

6. The method according to claim 3, wherein forming the candidate based on the corrected form of the confirmed text and the corresponding predicted or automated word and, upon detecting that the candidate containing the corrected form of the confirmed text is selected, correcting the confirmed text based on the selected candidate comprises:
determining whether the search result is obtained based on the original form or corrected form of the confirmed text, and;
when the search result is obtained based on the corrected form of the confirmed text, displaying the candidates containing the corrected form of the confirmed text to the user; otherwise, displaying the associated or predicted word in the search result to the user as the candidate; and
detecting an input of the user and, if the selected candidate contains the corrected form of the confirmed text, correcting the confirmed text.

7. The method according to claim 6, wherein determining whether the search result is obtained based on the original form or corrected form of the confirmed text comprises:
determining whether the search result has a correction marker or whether its correction marker has been changed, and when it has a correction marker or its correction marker has been changed, the search result is determined to be obtained based on the corrected form of the confirmed text; or
textually comparing a remaining portion besides the associated or predicted word with the confirmed text, and when they are identical, the search result is determined to be obtained based on the original form of the confirmed text.

8. The method according to claim 3, further comprise: prompting the user by displaying the corrected form of the confirmed text in a predetermined manner.

9. The method according to claim 3, wherein the corrected form comprises an initially capitalized form, an all-lowercase form or another written form of the confirmed text.

10. The method according to claim 3, wherein a phrase comprising a corrected form of the confirmed text and at least one subsequent word is stored in the corpus incompatibly with a phrase comprising an original form of the confirmed text and at least one subsequent word.

11. The method according to claim 2, wherein filtering the search result based on the string being currently entered comprises filtering the search result based respective on an original form of the string being currently entered and a corrected form thereof.

12. A device for context-based forward input error correction, comprising:
an obtaining unit, adapted to obtain a confirmed text;
a search unit, adapted to search a corpus based on a corrected form of the confirmed text to obtain a predicted or automated word corresponding to the corrected form of the confirmed text;
a candidate obtaining unit, adapted to form a candidate based on the corrected form of the confirmed text and the corresponding predicted or automated word, display the candidates and obtain a selected candidate based on an input; and
a correction unit, adapted to correct the confirmed text based on the selected candidate obtained.

13. The device according to claim 12, wherein the search unit is further adapted to, when there is no string being currently entered by a user, obtain a corresponding automated word based on the corrected form of the confirmed text and, and when there is a string being currently entered, obtain a corresponding predicted word, by searching the corpus based on the corrected form of the confirmed text and filtering a search result based on the string being currently entered, or by triggering use of the corrected form of the confirmed text based on the string being currently entered.

14. The device according to claim 13, wherein the obtaining unit is further adapted to, when there is a string being currently entered, obtain the string being currently entered.

15. The device according to claim 13, wherein the search unit is further adapted to search the corpus based respectively on the corrected form and an original form of the confirmed text to obtain a predicted or automated word corresponding to the corrected form of the confirmed text and a predicted or automated word corresponding to the original form of the confirmed text.

16. The device according to claim 15, wherein the candidate obtaining unit further comprises:
a determination unit, adapted to determining whether the search result is obtained based on the original form or corrected form of the confirmed text,
a candidate formation unit, adapted to, when the result is obtained based on the corrected form of the confirmed text, take a combination of the corrected form of the confirmed text and a corresponding automated or predicted word as a candidate based on the search result, and otherwise, take the automated or predicted word in the result as a candidate, and
a candidate detection unit, adapted to display the candidate from the candidate formation unit and obtain a candidate selected by the user input,
wherein the correction unit retrieves the selected candidate from the candidate obtaining unit and corrects the confirmed text based on the selected candidate.

17. The device according to claim 15, wherein the candidate obtaining unit further comprises:
a candidate formation unit, adapted to form a candidate based on the search result from the search unit;
a candidate detection unit, adapted to display the candidate to the user and obtain a candidate selected by the user by detecting an input of the user, and
a determination unit, adapted to determine whether the selected candidate is based on the original form of the confirmed text or on the corrected form thereof,
wherein, when the determination unit determines that the selected candidate is based on the corrected form of the confirmed text, the correction unit further corrects the confirmed text based on the candidate from the candidate obtaining unit.

18. The device according to claim 16 or 17, wherein determining whether the text is based on the original form of the confirmed text or on the corrected form thereof by the determination unit comprises:
determining whether the text has a correction marker or whether its correction marker has been changed, and when the text has a correction marker or its correction marker has been changed, the text is determined to be obtained based on the corrected form of the confirmed text; or
textually comparing a remaining portion besides the automated or predicted word with the confirmed text, and when they are identical, the text is determined to be obtained based on the original form of the confirmed text.

19. The device according to claim 16 or 17, wherein the candidate detection unit is further adapted to prompt the user by displaying the corrected form of the confirmed text in the candidate in a predetermined manner.

20. The device according to claim 16 or 17, wherein a phrase comprising a corrected form of the confirmed text and at least one subsequent word is stored in the corpus incompatibly with a phrase comprising an original form of the confirmed text and at least one subsequent word.
